(19) Europäisches Patentamt
European Patent Office
Office européen des brevets

(11) **EP 2 933 188 A1**

(12) **EUROPEAN PATENT APPLICATION**

(43) Date of publication:
**21.10.2015 Bulletin 2015/43**

(51) Int Cl.:
**B64C 29/00** (2006.01)    **B64C 21/04** (2006.01)

(21) Application number: **14075023.3**

(22) Date of filing: **17.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Chen, Li Jing**
**78380 Bougival (FR)**

(72) Inventor: **Chen, Li Jing**
**78380 Bougival (FR)**

Remarks:
Amended claims in accordance with Rule 137(2) EPC.

(54) **VTOL aircraft with a thrust-to-weight ratio smaller than 0.1**

(57)    An aircraft includes: ailerons (1,2); a turbofan engine (3) comprising a high-temp duct (4) with an openable/ closable propelling nozzle (5), and a low-temp duct (6) with an openable/closable propelling nozzle (7); a high-temp bypass duct (9) comprising an openable/closable inlet (8) connected to the high-temp duct(4), an outer wall(10) and a rectangle outlet(12) with a height-to-width ratio smaller than 0.1; a low-temp bypass duct (15) comprising an openable/closable inlet (14) connected to the low-temp duct (7), an outer wall (16), an inner wall (17) and a rectangle outlet (19) with a height-to-width ratio smaller than 0.1. During vertical take-off/lading, closing the propelling nozzles (5, 7) of turbofan engine (3), and opening the inlets (8,14) of high-temp and low-temp bypass ducts(9,15), low-temp planar air jet (20) is cause to flow over upper surface of the aircraft, thereby generating lift and no air flow over lower one.

B - B

FIG6

**Description**

This invention relates to aircraft, and more particularly, to aircraft with VTOL technology.

Currently, in the traditional VTOL technologies, thrust vectoring technology, such as AV-8, Yak-36 and F-35B, and additional lift engines, such as Yak-38 and Yak-141, in a least efficient way that air doesn't flow over the upper surface of the aircraft but rather over the lower one during vertical take-off/landing, get directly lift from reaction of atmosphere to air jet of jet engine; the use of tilt rotor, such as Boeing's V-22, and rotary wing, such as Boeing's X-50, in a little more efficient way that air both flow over the supper and lower of the aircraft during vertical take-off/landing, get lift from velocity difference of air which both flow the upper and lower surface of aircraft. Because of these limitations, VTOL is impossible for aircraft, and more particularly for large aircraft with thrust-to-weight smaller than 0.1.

An aircraft to achieve vertical take-off/landing in a much more efficient way that air flow over the upper surface of the aircraft rather than the lower one, the aircraft comprising:

- An aileron, which one pair rotate in opposite way for controlling horizontal balance and another pair in one way for controlling vertical balance during take-off/lading, disposed on both sides of the aircraft axis;
- A turbofan engine, comprising a high-temp duct with an openable and closable propelling nozzle and a low-temp duct with an openable and closable propelling nozzle;
- An openable and closable inlet of high-temp bypass duct, which is connected to the high-temp duct and is opened as the propelling nozzle of the high-temp duct is closed for causing high-temp airflow into the high-temp bypass duct during vertical take-off/landing, on the contrary, is closed as one of the high-temp duct is opened for causing high-temp airflow into atmosphere during forward flight.
- An outer wall of high-temp bypass duct, which any cross-sectional area is large enough to keep velocity of high-temp airflow less than one of sound along its direction for avoiding congestion.
- A rectangle outlet of high-temp bypass duct, which height-to-width ratio is smaller than 0.1 enough to convert high-temp air into high-temp planar jet flowing above low-temp planar jet for keeping no air to flow over the lower surface of the aircraft during vertical take-off/landing;
- An openable and closable inlet of low-temp bypass duct, which is connected to the low-temp duct and is opened as the propelling nozzle of the low-temp duct is closed for causing low-temp airflow into the low-temp bypass duct during vertical take-off/landing, on the contrary, is closed as one of the low-temp duct is opened for causing low-temp airflow into atmosphere during forward flight.
- An outer wall and an inner wall of low-temp bypass duct, which any cross-sectional area is large enough to keep velocity of low-temp airflow less than one of sound along its direction for avoiding congestion.
- A rectangle outlet of low-temp bypass duct, which height-to-width ratio is smaller than 0.1 and area is small enough to provide the necessary velocity of the low-temp planar jet with features: concentrated energy, wide coverage and slow decay of shaft velocity, disposed below the rectangle outlet of the high-temp bypass duct and on the upper surface of the aircraft for spewing the low-temp planar jet to flow over the upper one comprising the ailerons, thereby generating the life and the power controlling vertical and horizontal balances.

According to the first characteristics of embodiments:

- The rectangle outlet of low-temp bypass duct, during vertical take-off/landing, is part which converts low-temp air provided by low-temp duct of the turbofan engine into low-temp planar jet having features: concentrated energy, wide coverage and slow decay of shaft velocity.
- The high-temp bypass duct, during vertical take-off/landing, causes the high-temp air above the low-temp planar jet for keeping no air to flow over lower surface of the aircraft during vertical take-off/landing.
- The aileron, during vertical take-off/landing, one pair rotate in opposite way to control the horizontal balance and another pair rotate in one way control the vertical balance. The attached drawings illustrate the invention:

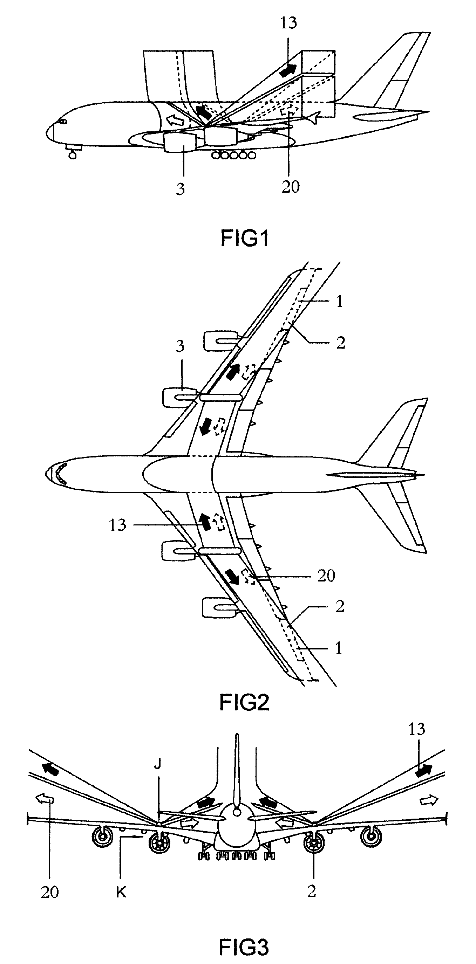

    Fig. 1 is a side view of an aircraft with this invention during vertical take-off and landing.
    Fig. 2 is a top view of an aircraft with this invention during vertical take-off and landing.
    Fig. 3 is a rear view of an aircraft with this invention during vertical take-off and landing.

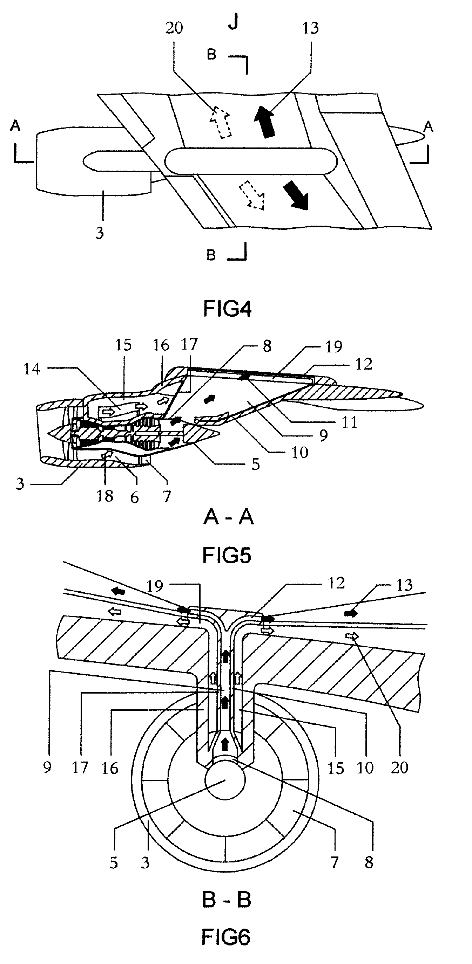

    Fig. 4 is J local view for Fig. 3.
    Fig. 5 is A-A Section for Fig. 4
    Fig. 6 is B-B Section for Fig. 4.

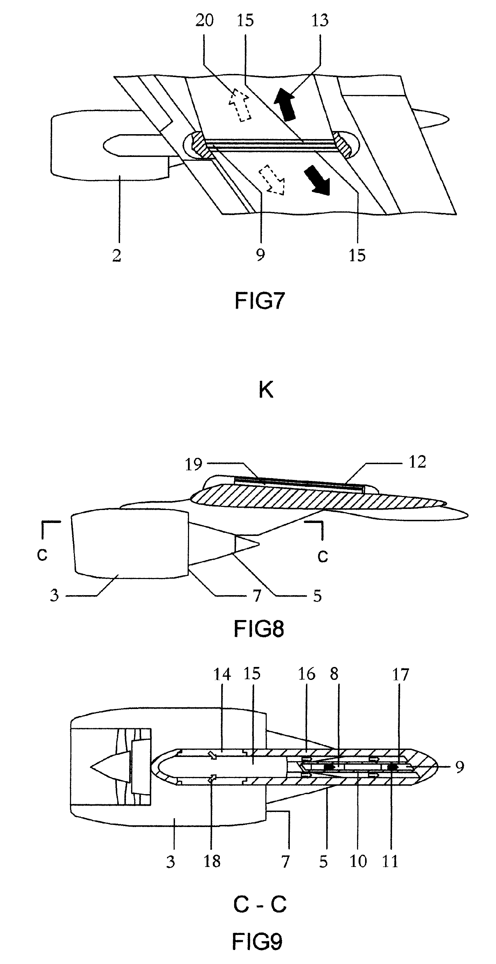

    Fig. 7 is part Section for Fig. 4.
    Fig. 8 is K local view for Fig. 3.
    Fig. 9 is C-C Section for Fig. 8.

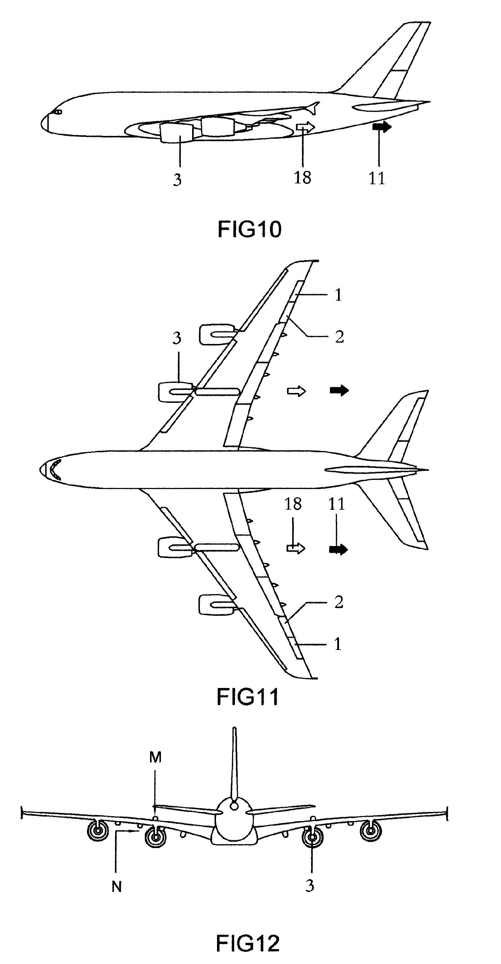

    Fig. 10 is a side view of an aircraft with this invention during forward flight.

Fig. 11 is a top view of an aircraft with this invention during forward flight.
Fig. 12 is a rear view of an aircraft with this invention during forward flight.

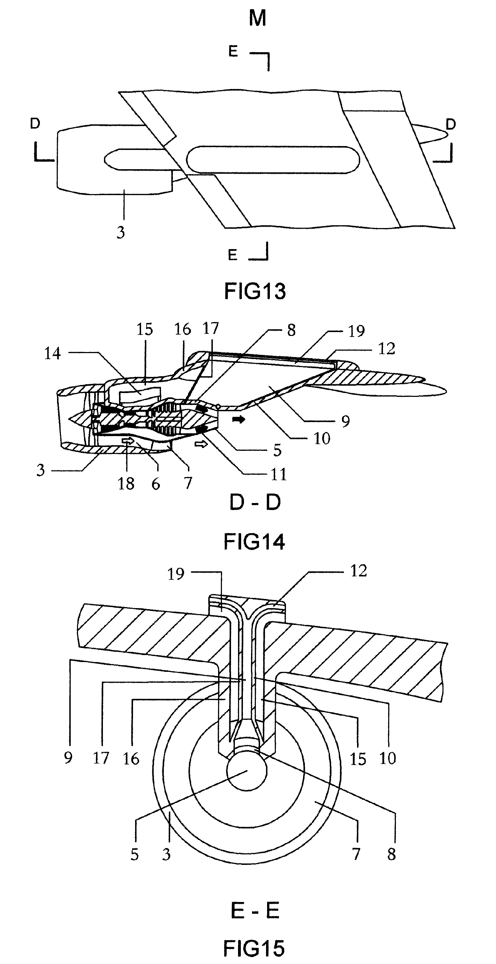

Fig. 13 is M local view for Fig. 12.
Fig. 14 is D-D Section for Fig. 13.
Fig. 15 is E-E Section for Fig. 13.

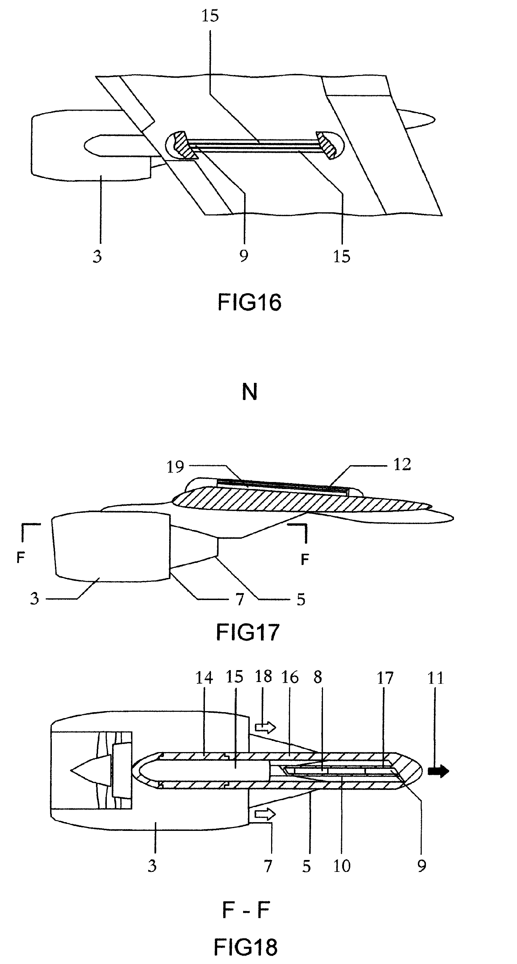

Fig. 16 is part Section for Fig. 13.
Fig. 17 is N local view for Fig. 12.
Fig. 18 is F-F Section for Fig. 17.

Referring to these drawings, the aircraft comprising: an aileron (1, 2) which one pair(1) rotate in opposite way and another pair (2) rotate in one way; a turbofan engine (3) comprising a high-temp duct (4) with an openable and closable propelling nozzle (5), and a low-temp duct (6) with an openable and closable propelling nozzle (7); an openable and closable inlet (8) of high-temp bypass duct (9), connected to the high-temp duct (4); an outer wall (10) of high-temp bypass duct (9), which any cross-sectional area is large enough to keep velocity of high-temp airflow (11) less than one of sound along its direction for avoiding congestion; a rectangle outlet (12) of high-temp bypass duct (9), which height-to-width ratio is smaller than 0.1 enough to form high-temp planar jet (13); an openable and closable inlet (14) of low-temp bypass duct (15), connected to the low-temp duct (6); an outer wall (16) and an inner wall (17) of low-temp bypass duct (15), which any cross-sectional area is large enough to keep velocity of low-temp airflow (18) less than one of sound along its direction for avoiding congestion; a rectangle outlet (19) of low-temp bypass duct (15), which height-to-width ratio is smaller than 0.1 and area is small enough to provide the necessary velocity of the low-temp planar jet (20) with features: concentrated energy, wide coverage and slow decay of shaft velocity.

Referring to Fig.(1-9), the innovative combination being configured, during vertical take-off/lading, in such that closing the propelling nozzles (5, 7) of the high-temp duct (4) and low-temp duct (6) and opening the inlets (8, 14) of the high-temp bypass duct (9) and low-temp bypass duct (15), cause high-temp air (11) and low-temp air (18) in to flow over corresponding high-temp bypass duct (9) and low-temp bypass duct (15), then the low-temp planar jet (20) spews out of the outlet (19) of low-temp bypass duct (15), over upper surface of the aircraft including the aileron (1, 2), thereby generating lift for vertical take-off/landing and power for controlling the vertical and horizontal balances of the aircraft, and the high-temp planar jet (13) spews out of the outlet (12) of high-temp bypass duct (9), above the low-temp planar jet (20), into atmosphere for keeping no air to flow over lower surface of the aircraft.

Referring to Fig.(10-18), the innovative combination being configured, during forward flight, restore to normal states in order that high-temp air (11) and low-temp air (18) spew directly into atmosphere from the open propelling nozzles(5, 7) of the high-temp duct (4) and a low-temp duct(6).

All the formulas and calculations for this invention are listed in Annex 1.

All the formulas and calculations used to retrofit an Airbus A-380 based on this invention are listed in Annex 2.

This invention can be used to retrofit and existing aircraft to achieve VTOL or manufacture a VTOL aircraft with a thrust-to-weight ratio smaller than 0.1.

ANNEX 1

| | | |
|---|---|---|
| $P$ | Atmospheric pressure | (Unit: Pa) |
| $R$ | Ideal gas constant | (Unit: $J. K^{-1}. mol^{-1}$) |
| $\rho_0$ | Low-temp jet density at the outlet | (Unit: $kg/m^3$) |
| $\rho_1$ | Atmospheric density | (Unit: $kg/m^3$) |
| $\rho$ | Jet density on the cross-section | (Unit: $kg/m^3$) |
| $\rho_m$ | Jet density of the shaft | (Unit: $kg/m^3$) |
| $T_0$ | Jet temp at the low-temp outlet | (Unit: K) |
| $T_1$ | Atmospheric temp | (Unit: K) |
| $T$ | Jet temp on the cross-section | (Unit: $K$) |
| $V_0$ | Jet speed at the outlet of low-temp bypass duct | (Unit: $m/s$) |
| $V_0'$ | Jet speed at the outlet of high-temp bypass duct | (Unit: $m/s$) |
| $V$ | Jet speed on the cross-section | (Unit: $m/s$) |
| $V_m$ | Jet speed of shaft | (Unit: $m/s$) |
| $h_0$ | Jet height of the outlet | (Unit: m) |

(continued)

| | | |
|---|---|---|
| $h_m$ | Jet height of the cross-section | (Unit: m) |
| $h$ | Jet height on the cross-section | (Unit: m) |
| $L$ | Width of the outlet | (Unit: m) |
| $C$ | Gas specific volume | (Unit: $m3/kg$) |
| $M$ | Molar mass | (Unit: $kg/mol$) |
| $Q$ | Air inflow of turbofan engine | (Unit: $kg/s$) |
| $B$ | Bypass ratio of turbofan engine | (Dimensionless unit) |
| $G$ | Maximum take-off weight | (Unit: T) |
| $X$ | Distance between any point and outlet of low-temp bypass duct in jet direction | (Unit: m) |
| $X_1$ | Distance between wing root and low-temp outlet in jet direction | (Unit: $m$) |
| $X_2$ | Distance between low-temp outlet and crossing of jet boundary and trailing edge of wing in jet direction | (Unit: m) |
| $X_3$ | Distance between wingtip and low-temp outlet in jet direction | (Unit: $m$) |
| $\alpha$ | Angle between jet boundary and trailing edge of wing | (Unit: °) |
| $\beta$ | Angle between chord line of wing and long side of outlet | (Unit: °) |
| $\gamma$ | Dihedral angle of wing | (Unit: °) |
| $\delta$ | Sweep forward angle of jet | (Unit: °) |
| $\phi$ | Included angle between axis of low-temp jet And one of the high-temp jet | (Unit: °) |
| $\theta$ | Sweep back angle of jet | (Unit: °) |
| $F$ | Total vertical lift | (Unit: T |
| $F_1$ | Lift between wing root and low-temp outlet | (Unit: T) |
| $F_2$ | Lift between low-temp outlet and crossing of jet boundary and trailing edge of wing | (Unit: $T$) |
| $F_3$ | Lift between wingtip and low-temp outlet | (Unit: T) |
| $F_4$ | Downward pressure generated by slant upward deflected jet | (Unit: T) |
| $F_5$ | Thrust generated by jet of low-temp outlet | (Unit: T) |
| $F_6$ | Thrust generated by jet of high-temp outlet | (Unit: T) |
| $b$ | Constant | (Dimensionless unit) |
| $d$ | Constant | (Dimensionless unit) |
| $C$ | Constant | (Dimensionless unit) |
| $n_1$ | S/N of turbofan engine | (Dimensionless unit) |
| $n_2$ | S/N of turbofan engine used in vertical Take-off/landing | (Dimensionless unit) |
| $n_3$ | S/N of outlet of low-temp bypass duct | (Dimensionless unit) |
| $TWR$ | Thrust-to-weight ratio of aircraft | (Dimensionless unit) |

According to thermodynamic, relative values of the enthalpy of the jet cross-section, in the case of equal pressure and the surrounding gas enthalpy acting as a starting point, is same.

And according to the feature of planar jet, it just spread on the flat which is perpendicular to the outlet section.

$$P = \frac{\rho_0}{M} RT_0 = \frac{\rho_1}{M} RT_1 = \frac{\rho}{M} RT$$

$$\rho_0 V_0 h_0 LC(T_0 - T_1) = \int \rho VL\, C(T - T_1)dh$$

$$\rho_0 V_0 h_0 \left(\frac{1}{\rho_0} - \frac{1}{\rho_1}\right) = \int \rho V \left(\frac{1}{\rho} - \frac{1}{\rho_1}\right) dh$$

And according to the similarity of velocity and density distribution on the various jet sections,

$$\sqrt{\frac{V}{V_m}} = \frac{\rho - \rho_1}{\rho_m - \rho_1} = 1 - 1 - \left(\frac{h}{h_m}\right)^{1.5}$$

$$h_0 V_0 (\rho_0 - \rho_1) = \int (\rho - \rho_1) V dh$$

$$\frac{h_0 V_0 (\rho_0 - \rho_1)}{(\rho_m - \rho_1) V_m h_m} = \int \frac{(\rho - \rho_1) V}{(\rho_m - \rho_1) V_m h_m} dh = \int_0^{h_m} \left[1 - \left(\frac{h}{h_m}\right)^{1.5}\right]^3 \cdot \frac{1}{h_m} dh$$

$$= \int_0^1 \left[1 - \left(\frac{h}{h_m}\right)^{1.5}\right]^3 d\left(\frac{h}{h_m}\right) = 0.3682$$

$$(\rho_m - \rho_1) = \frac{h_0 V_0 (\rho_0 - \rho_1)}{0.3682 \cdot V_m h_m} \tag{1}$$

According to dynamic characteristic of jet, momentum of the various sections, in the case of equal pressure, is same.

$$\rho_0 L h_0 V_0^2 = \int \rho L V^2 dh$$

$$\rho_0 h_0 V_0^2 = \int \rho V^2 dh = \int (\rho - \rho_1) V^2 dh + \int \rho_1 V^2 dh$$

$$\frac{\rho_0 h_0 V_0^2}{(\rho_m - \rho_1) V_m^2 h_m}$$

$$= \int_0^1 \frac{(\rho - \rho_1) V^2}{(\rho_m - \rho_1) V_m^2} d\left(\frac{h}{h_m}\right) + \int_0^1 \frac{\rho_1 V^2}{(\rho_m - \rho_1) V_m^2} d\left(\frac{h}{h_m}\right)$$

$$= \int_0^1 \left[1 - \left(\frac{h}{h_m}\right)^{1.5}\right]^5 d\left(\frac{h}{h_m}\right) + \frac{\rho_1}{(\rho_m - \rho_1)} \int_0^1 \left[1 - \left(\frac{h}{h_m}\right)^{1.5}\right]^4 d\left(\frac{h}{h_m}\right)$$

$$= 0.2786 + \frac{0.3156 \rho_1}{(\rho_m - \rho_1)}$$

$$\frac{0.3682 V_0 \rho_0}{V_m (\rho_0 - \rho_1)} = 0.2786 + \frac{0.1162 h_m V_m \rho_1}{h_0 V_0 (\rho_0 - \rho_1)} \tag{2}$$

Substitute (1) into (2):

$$\frac{0.1162h_m\rho_1}{h_0\rho_0}\cdot\left(\frac{V_m}{V_0}\right)^2 + 0.2786\frac{(\rho_0-\rho_1)}{\rho_0}\cdot\left(\frac{V_m}{V_0}\right) - 0.3682 = 0$$

$$\frac{V_m}{V_0} = \frac{\dfrac{0.2786(\rho_1-\rho_0)}{\rho_0}+\sqrt{\left[\dfrac{0.2786(\rho_0-\rho_1)}{\rho_0}\right]^2+\dfrac{0.1711h_m\rho_1}{h_0\rho_0}}}{\dfrac{0.2324h_m\rho_1}{h_0\rho_0}}$$

$$V_m = \frac{1+\sqrt{1+\dfrac{0.1711h_m\rho_0\rho_1}{0.2786^2h_0(\rho_0-\rho_1)^2}}}{\dfrac{0.2324h_m\rho_1}{0.2786h_0(\rho_0-\rho_1)}}V_0 \tag{3}$$

Substitute (3) into (1)

$$(\rho_m-\rho_1) = \frac{h_0V_0(\rho_0-\rho_1)}{0.3682\cdot V_mh_m}$$

$$\rho_m = \rho_1 - \frac{\dfrac{0.2324}{0.3682\times0.2786}\rho_1}{1+\sqrt{1+\dfrac{0.1711h_m\rho_0\rho_1}{0.2786^2h_0(\rho_0-\rho_1)^2}}} \tag{4}$$

When $X \le X_1$ or $X \le X_2$

$$F = P - \left(P - \frac{1}{2}\int \rho_mV_m^2Ldx\right) = \frac{1}{2}\int \rho_mV_m^2Ldx$$

Substitute (3), (4) into (2)

$$= \frac{1}{2} \int_0^X \left[ \rho_1 - \frac{\frac{0.2324}{0.3682 \times 0.2786} \rho_1}{1 + \sqrt{1 + \frac{0.1711 h_m \rho_0 \rho_1}{0.2786^2 h_0 (\rho_0 - \rho_1)^2}}} \right] \cdot \left[ \frac{1 + \sqrt{1 + \frac{0.1711 h_m \rho_0 \rho_1}{0.2786^2 h_0 (\rho_0 - \rho_1)^2}}}{\frac{0.2324 h_m \rho_1}{0.2786 h_0 (\rho_0 - \rho_1)}} \right]^2 \cdot V_0^2 L dx$$

$$= \frac{1}{2} \int_0^X \left\{ \rho_1 \left[ \frac{1 + \sqrt{1 + \frac{0.1711 h_m \rho_0 \rho_1}{0.2786^2 h_0 (\rho_0 - \rho_1)^2}}}{\frac{0.2324 h_m \rho_1}{0.2786 h_0 (\rho_0 - \rho_1)}} \right]^2 \right.$$

$$\left. - \frac{0.2324}{0.3682 \times 0.2786} \rho_1 \cdot \left[ \frac{1 + \sqrt{1 + \frac{0.1711 h_m \rho_1 \rho_0}{0.2786^2 h_0 (\rho_1 - \rho_0)^2}}}{\frac{0.2324 h_m \rho_1}{0.2786 h_0 (\rho_1 - \rho_0)}} \right] \right\} \cdot V_0^2 L dx$$

$$= \frac{1}{2} \int_0^X \rho_1 \left\{ \frac{2 + \frac{0.1711 h_m \rho_1 \rho_0}{0.2786^2 h_0 (\rho_1 - \rho_0)^2} + 2\sqrt{1 + \frac{0.1711 h_m \rho_1 \rho_0}{0.2786^2 h_0 (\rho_1 - \rho_0)^2}}}{\left[ \frac{0.2324 h_m \rho_1}{0.2786 h_0 (\rho_1 - \rho_0)} \right]^2} \right.$$

$$\left. - \frac{\frac{0.2324}{0.3682 \times 0.2786} + \frac{0.2324}{0.3682 \times 0.2786} \sqrt{1 + \frac{0.1711 h_m \rho_1 \rho_0}{0.2786^2 h_0 (\rho_1 - \rho_0)^2}}}{\left[ \frac{0.2324 h_m \rho_1}{0.2786 h_0 (\rho_1 - \rho_0)} \right]^2} \right\} \cdot V_0^2 L dx$$

$$= \frac{1}{2} \int_0^X \left\{ \frac{0.1711 \rho_0}{0.2324^2 \left( \frac{h_m}{h_0} \right)} - \frac{1.2655}{\left[ \frac{0.2324 \rho_1}{0.2786 (\rho_1 - \rho_0)} \right]^2 \left( \frac{h_m}{h_0} \right)^2} - \frac{0.2655 \sqrt{1 + \frac{0.1711 \rho_1 \rho_0}{0.2786^2 (\rho_1 - \rho_0)^2} \cdot \left( \frac{h_m}{h_0} \right)}}{\left[ \frac{0.2324 \rho_1}{0.2786 (\rho_1 - \rho_0)} \cdot \left( \frac{h_m}{h_0} \right) \right]^2} \right\}$$

$$\cdot V_0^2 L dx$$

Because of

$$\frac{h_m}{h_0} = 2.44 \left( \frac{0.24x}{h_0} + 0.41 \right)$$

When $X \leq X_2$ or $X \leq X_3$

$$F_1 = \frac{1}{2} \int_{1.0004}^{2.44\left(\frac{0.24X_1}{h_0}+0.41\right)} \left\{ \frac{0.1711\rho_0}{0.2324^2\left(\frac{h_m}{h_0}\right)} - \frac{1.2655}{\left[\frac{0.2324\rho_1}{0.2786(\rho_1-\rho_0)}\right]^2\left(\frac{h_m}{h_0}\right)^2} \right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot\left(\frac{h_m}{h_0}\right)\right]^2} \right\} \cdot \frac{h_0 V_0^2 L}{2.44\times0.24} d\left(\frac{h_m}{h_0}\right)$$

$$= \frac{1}{2} \int_{1.0004}^{2.44\left(\frac{0.24X_1}{h_0}+0.41\right)} \left\{ \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655}{\left[\frac{0.2324\rho_1}{0.2786(\rho_1-\rho_0)}\right]^2} \cdot \frac{\sqrt{1+\frac{0.1711\rho_1\rho_0}{0.2786^2(\rho_1-\rho_0)^2}\cdot x}}{\cdot x^2} \right\} \cdot \frac{h_0 V_0^2 L}{2.44\times0.24} dx$$

$$\int \frac{\sqrt{1+bx}}{x^2} dx = -\left(\frac{\sqrt{1+bx}}{x} - \frac{b}{2}\ln\frac{\sqrt{1+bx}-1}{\sqrt{1+bx}+1} + C\right)$$

$$F_1 = \left\{ \frac{0.1711\rho_0}{0.2324^2}\ln x + \frac{1.2655}{\left[\frac{0.2324\rho_1}{0.2786(\rho_1-\rho_0)}\right]^2 x} + \frac{0.2655}{\left[\frac{0.2324\rho_1}{0.2786(\rho_1-\rho_0)}\right]^2} \cdot \left[ \frac{\sqrt{1+\frac{0.1711\rho_1\rho_0}{0.2786^2(\rho_1-\rho_0)^2}\cdot x}}{x} \right.\right.$$

$$\left.\left. - \frac{0.1711\rho_1\rho_0}{2\times0.2786^2(\rho_1-\rho_0)^2}\ln\frac{\sqrt{1+\frac{0.1711\rho_1\rho_0}{0.2786^2(\rho_1-\rho_0)^2}\cdot x}-1}{\sqrt{1+\frac{0.1711\rho_1\rho_0}{0.2786^2(\rho_1-\rho_0)^2}\cdot x}+1} \right] \right\}_{2.44\times0.41}^{2.44\left(\frac{0.24X_1}{h_0}+0.41\right)}$$

$$\times \frac{1}{2} \times \frac{h_0 V_0^2 L}{2.44\times0.24} \tag{5}$$

$$F_2 = \left\{ \frac{0.1711\rho_0}{0.2324^2}\ln x + \frac{1.2655}{\left[\frac{0.2324\rho_1}{0.2786(\rho_1-\rho_0)}\right]^2 x} + \frac{0.2655}{\left[\frac{0.2324\rho_1}{0.2786(\rho_1-\rho_0)}\right]^2} \cdot \left[ \frac{\sqrt{1+\frac{0.1711\rho_1\rho_0}{0.2786^2(\rho_1-\rho_0)^2}\cdot x}}{x} \right.\right.$$

$$\left.\left. - \frac{0.1711\rho_1\rho_0}{2\times0.2786^2(\rho_1-\rho_0)^2}\ln\frac{\sqrt{1+\frac{0.1711\rho_1\rho_0}{0.2786^2(\rho_1-\rho_0)^2}\cdot x}-1}{\sqrt{1+\frac{0.1711\rho_1\rho_0}{0.2786^2(\rho_1-\rho_0)^2}\cdot x}+1} \right] \right\}_{2.44\times0.41}^{2.44\left(\frac{0.24X_2}{h_0}+0.41\right)}$$

$$\times \frac{1}{2} \times \frac{h_0 V_0^2 L}{2.44\times0.24} \tag{6}$$

When $X_2 \leq X \leq X_3$

$$F_3 = \frac{1}{2}\int_{X_2}^{X_3}\left\{\frac{0.1711\rho_0}{0.2324^2\left(\frac{h_m}{h_0}\right)} - \frac{1.2655}{\left[\frac{0.2324\rho_1}{0.2786(\rho_1-\rho_0)}\right]^2\left(\frac{h_m}{h_0}\right)^2}\right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot\left(\frac{h_m}{h_0}\right)\right]^2}\right\} \times V_0^2[L-(x-X_2)\times\tan\alpha]dx \qquad (7)$$

When force is zero in body axis direction,

$$F_4 = F_5 + F_6$$

$$(F_4 + F_5 + F_6)\sin\delta = (F_5 + F_6)\sin\theta$$

$$\delta = \sin^{-1}\frac{1}{2}\sin\theta \qquad (8)$$

$$F = n_2(F_1 + F_2 + F_3)\cos\beta\cos\gamma - n_2[F_4\cos\delta + F_6\sin(\emptyset+\gamma) - F_6\sin(\emptyset-\gamma)] \qquad (9)$$

VTOL can be achieved once : F>G

ANNEX 2

$n_1 = 1\sim4$
$n_2 = 1\sim2$
$n_3 = 1\sim4$
$M$ = 29 *kg/mol*
$Q$(*Air inflow of Trent* 900 *turbo f an engine*) = 1204 *kg/s*
$B$(*Bypass ratio of Trent* 900*turbofan engine*) = 8.5:1 1
$G$(*Maximum take - of f weight of A380*) = 560 *T*
$T_0$ = 383*K*
$\rho_1$ = 1.293*kg/m*$^2$

Assuming:

$\theta$ = 36.5°

$$F_4 = \frac{1}{n_2}QV_0 = 1204 \times 243 = 292572N = 12.7\,T$$

$$\rho_0 = \frac{MP_0}{RT_0} = \frac{101325 \times 29 \times 0.001}{8.31 \times 383} = 0.9232\,kg/m^3$$

$h_0$ = 0.4m
L = 6m

$$V_0 = \frac{\frac{1}{n_2} \times Q \times \frac{8.5}{8.5+1}}{\rho_0 \times L \times h_0} = \frac{\frac{1}{2} \times 1204 \times \frac{8.5}{8.5+1}}{0.9232 \times 6 \times 0.4} = 243 m/s$$

$$V_0' = V_0 = 243 \ m/s$$

$$F_6 = \frac{1}{n_2} Q \times \frac{1}{8.5+1} \times V_0 = 15398.5363 \ N = 1.57 \ T$$

$X_1 = 11 \ m$
$X_2 = 18m$
$X_3 = 32 \ m$
$\alpha = 14°$
$\beta = 5°$
$\gamma = 5°$
$\theta = 36.5°$
$\emptyset = 18.75°$

$$F_1 = 121002.0492\left[2.9246\,ln\,x + \frac{0.1488}{x} + 0.0312 \cdot \left[\frac{\sqrt{1+19.2419x}}{x}\right.\right.$$

$$\left.\left.-9.621\,ln\,\frac{\sqrt{1+19.2419x}-1}{\sqrt{1+19.2419x}+1}\right]_{2.44\times0.41}^{2.44\left(\frac{0.24X_1}{h_0}+0.41\right)}\right.$$

$$= 121002.0492\left\{2.9246\,ln\,\frac{2.44\left(\frac{0.24\times11}{0.4}+0.41\right)}{2.44\times0.41}\right.$$

$$+0.1488\left[\frac{1}{2.44\left(\frac{0.24\times11}{0.4}+0.41\right)} - \frac{1}{2.44\times0.41}\right]$$

$$+0.0312 \cdot \left[\frac{\sqrt{1+19.2419\times2.44\left(\frac{0.24\times11}{0.4}+0.41\right)}}{2.44\left(\frac{0.24\times11}{0.4}+0.41\right)} - \frac{\sqrt{1+19.2419\times2.44\times0.41}}{2.44\times0.41}\right.$$

$$-9.621\,ln\,\frac{\sqrt{1+19.2419\times2.44\left(\frac{0.24\times11}{0.4}+0.41\right)}-1}{\sqrt{1+19.2419\times2.44\left(\frac{0.24\times11}{0.4}+0.41\right)}+1}$$

$$\left.\left.+9.621\,ln\,\frac{\sqrt{1+19.2419\times2.44\times0.41}-1}{\sqrt{1+19.2419\times2.44\times0.41}+1}\right]\right\}$$

$$= 121002.0492[8.3028 - 0.14 - 0.1072 - 0.1026]$$

$$= 962329N$$

$$= 98T \tag{5}$$

$$F_2 = 121002.0492 \left\{ 2.9246 \, ln \frac{2.44 \left( \frac{0.24 \times 18}{0.4} + 0.41 \right)}{2.44 \times 0.41} \right.$$

$$+ 0.1488 \left[ \frac{1}{2.44 \left( \frac{0.24 \times 18}{0.4} + 0.41 \right)} - \frac{1}{2.44 \times 0.41} \right]$$

$$+ 0.0312 \cdot \left[ \frac{\sqrt{1 + 19.2419 \times 2.44 \left( \frac{0.24 \times 18}{0.4} + 0.41 \right)}}{2.44 \left( \frac{0.24 \times 18}{0.4} + 0.41 \right)} \right.$$

$$\left. - \frac{\sqrt{1 + 19.2419 \times 2.44 \times 0.41}}{2.44 \times 0.41} \right] - 9.621 \, ln \frac{\sqrt{1 + 19.2419 \times 2.44 \left( \frac{0.24 \times 18}{0.4} + 0.41 \right)} - 1}{\sqrt{1 + 19.2419 \times 2.44 \left( \frac{0.24 \times 18}{0.4} + 0.41 \right)} + 1}$$

$$\left. + 9.621 \, ln \frac{\sqrt{1 + 19.2419 \times 2.44 \times 0.41} - 1}{\sqrt{1 + 19.2419 \times 2.44 \times 0.41} + 1} \right] \right\}$$

$$= 121002.0492 [9.6758 - 0.1358 - 0.1141 - 0.1047]$$

$$= 1127884.301 N$$

$$= 115 T \hspace{6cm} (6)$$

$$F_3 = \frac{1}{2} \int_{2.44\left(\frac{0.24X_2}{h_0}+0.41\right)}^{2.44\left(\frac{0.24X_3}{h_0}+0.41\right)} \left\{ \frac{0.1711\rho_0}{0.2324^2 \left(\frac{h_m}{h_0}\right)} - \frac{1.2655}{\left[\frac{0.2324\rho_1}{0.2786(\rho_1-\rho_0)}\right]^2 \left(\frac{h_m}{h_0}\right)^2} \right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot\left(\frac{h_m}{h_0}\right)\right]^2} \right\}$$

$$\times \left[ L - \left(\frac{h_0}{2.44\times0.24}\times\left(\frac{h_m}{h_0}\right) - \frac{0.41h_0}{0.24} - X_2\right)\times tan\,\alpha \right]\frac{h_0 V_0^2}{2.44\times0.24}d\left(\frac{h_m}{h_0}\right)$$

$$= \frac{1}{2} \int_{2.44\left(\frac{0.24X_2}{h_0}+0.41\right)}^{2.44\left(\frac{0.24X_3}{h_0}+0.41\right)} \left\{ \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655\sqrt{1+\frac{0.1711\rho_1\rho_0}{0.2786^2(\rho_1-\rho_0)^2}\cdot\left(\frac{h_m}{h_0}\right)}}{\left[\frac{0.2324\rho_1}{0.2786(\rho_1-\rho_0)}\cdot x\right]^2} \right\}$$

$$\cdot \left[ L - \left(\frac{h_0}{2.44\times0.24}x - \frac{0.41h_0}{0.24} - X_2\right)\times tan\,\alpha \right]\frac{h_0 V_0^2}{2.44\times0.24}dx$$

$$= \frac{1}{2} \int_{2.44\left(\frac{0.24X_2}{h_0}+0.41\right)}^{2.44\left(\frac{0.24X_3}{h_0}+0.41\right)} \left\langle \frac{0.1711\rho_0}{0.2324^2 x} - \frac{1.2655}{\left[\frac{0.2324\rho_1}{0.2786(\rho_1-\rho_0)}\right]^2 x^2} \right.$$

$$\left. - \frac{0.2655\sqrt{1+\frac{0.1711\rho_1\rho_0}{0.2786^2(\rho_1-\rho_0)^2}\cdot x}}{\left[\frac{0.2324\rho_1}{0.2786(\rho_1-\rho_0)}\right]^2 x^2} \right\} \cdot \left[ L + \left(\frac{0.41h_0}{0.24} + X_2\right)\cdot tan\,\alpha \right]$$

$$- \left\{ \frac{0.1711\rho_0}{0.2324^2} - \frac{1.2655}{\left[\frac{0.2324\rho_1}{0.2786(\rho_1-\rho_0)}\right]^2 x} - \frac{0.2655\sqrt{1+\frac{0.1711\rho_1\rho_0}{0.2786^2(\rho_1-\rho_0)^2}\cdot x}}{\left[\frac{0.2324\rho_1}{0.2786(\rho_1-\rho_0)}\cdot\right]^2 x} \right\}$$

$$\frac{h_0\,tan\,\alpha}{2.44\times0.24}\rangle\frac{h_0 V_0^2}{2.44\times0.24}dx$$

$$\int \frac{\sqrt{1+dx}}{x}dx = 2\sqrt{1+dx} - ln\frac{\sqrt{1+dx}-1}{\sqrt{1+dx}+1} + C$$

$$F_3 = 121002.0492\{10.6583\times[2.9246\,ln\,x + \frac{0.1488}{x}$$

$$+0.0312\cdot\left(\frac{\sqrt{1+19.2419x}}{x} - 9.621\,ln\frac{\sqrt{1+19.2419x}-1}{\sqrt{1+19.2419x}+1}\right)]$$

$$-0.1703[2.9246x - 0.1488ln\,x - 0.0312(2\sqrt{1+19.2419x}$$

$$= 121002.0492\left\{10.6625\times\left[2.9246\,ln\frac{47.8484}{27.3524}\right.\right.$$

$$+0.1488\left(\frac{1}{47.8484}-\frac{1}{27.3524}\right)+0.0312\left(\frac{\sqrt{1+19.2419\times47.8484}}{47.8484}-\frac{\sqrt{1+19.2419\times27.3524}}{27.3524}\right.$$

$$-9.621\,ln\frac{\sqrt{1+19.2419\times47.8484}-1}{\sqrt{1+19.2419\times47.8484}+1}+9.621\,ln\frac{\sqrt{1+19.2419\times27.3524}-1}{\sqrt{1+19.2419\times27.3524}+1}\right)]$$

$$-0.1703[2.9246(47.8484-27.3524)-0.1488ln\frac{47.8484}{27.3524}-0.0312\left(2\sqrt{1+19.2419\times47.8484}\right.$$

$$-2\sqrt{1+19.2419\times27.3524}-ln\frac{\sqrt{1+19.2419\times47.8484}-1}{\sqrt{1+19.2419\times47.8484}+1}$$

$$+ln\frac{\sqrt{1+19.2419\times27.3524}-1}{\sqrt{1+19.2419\times27.3524}+1}\right)]\}$$

$$=121002.0492\{10.6625\times[1.6355-0.0023+0.0312(-0.205$$

$$-0.2044)]-0.1703[59.9426-0.0832-0.0312(14.7926$$

$$-0.0212)]\}$$

$$=866644.4884N$$

$$=88T \tag{7}$$

$$\delta=\sin^{-1}\left(\frac{1}{2}sin\,\theta\right)$$

$$=sin^{-1}\left(\frac{1}{2}si\,n\,36.5°\right)$$

$$=17.3° \tag{8}$$

According to this sweep forward angle, low-temp planar jet can keep balances during vertical take-off/landing.

$$F=n_2(F_1+F_2+F_3)\cos\beta\cos\gamma-n_2[F_4\cos\delta+F_6\sin(\emptyset+\gamma)-F_6\sin(\emptyset-\gamma)]$$

$$=2(98+115+88)\cos5°\cos5°-2[12.7\cos17.3°+1.57\sin(18.75°+5°)$$

$$-1.57\,sin(18.75°-5°)]$$

$$=573\,T \tag{9}$$

$$F-G=573-560=13\,T>0$$

$$TWR=\frac{n_3(F_5+F_6)}{G}=\frac{n_3F_4}{G}=\frac{4\times12.7}{560}=0.09<0.1 \tag{10}$$

It is clearly demonstrated above that VTOL is achievable on Airbus A380 once remodeled as shown, and more particularly, in case of using just two turbofan engines and thrust-to-weight ratio smaller than 0.1.

Claims

1. An aircraft to achieve vertical take-off/landing in a much more efficient way that air flow over the upper surface of the aircraft rather than the lower one, the aircraft comprising:

   - An aileron (1, 2), which one pair (1) rotate in opposite way for controlling horizontal balance and another pair (2) rotate in one way for controlling vertical balance during vertical take-off/lading, disposed on both sides of the aircraft axis;
   - A turbofan engine (3), comprising a high-temp duct (4) with an openable and closable propelling nozzle (5) and a low-temp duct (6) with an openable and closable propelling nozzle (7);
   - An openable and closable inlet (8) of high-temp bypass duct (9), which is connected to the high-temp duct (4) and is opened as the propelling nozzle (5) of the high-temp duct (4) is closed for causing high-temp airflow (11) into the high-temp bypass duct (9) during vertical take-off/landing, on the contrary, is closed as one of the high-temp duct (4) is opened for causing high-temp airflow (11) into atmosphere during forward flight.
   - An outer wall (10) of high-temp bypass duct (9), which any cross-sectional area is large enough to keep velocity of high-temp airflow (11) less than one of sound along its direction for avoiding congestion.
   - A rectangle outlet (12) of high-temp bypass duct (9), which height-to-width ratio is smaller than 0.1 enough to convert high-temp air (11) into high-temp planar jet (13) flowing above low-temp planar jet (20) for keeping no air to flow over the lower surface of the aircraft during vertical take-off/landing;
   - An openable and closable inlet (14) of low-temp bypass duct (15), which is connected to the low-temp duct (6) and is opened as the propelling nozzle (7) of the low-temp duct (6) is closed for causing low-temp airflow (18) into the low-temp bypass duct (15) during vertical take-off/landing, on the contrary, is closed as one (7) of the low-temp duct (6) is opened for causing low-temp airflow (18) into atmosphere during forward flight.
   - An outer wall (16) and an inner wall (17) of low-temp bypass duct (15), which any cross-sectional area is large enough to keep velocity of low-temp airflow (18) less than one of sound along its direction for avoiding congestion.
   - A rectangle outlet (19) of low-temp bypass duct (15) which height-to-width ratio is smaller than 0.1 and area is small enough to provide the necessary velocity of the low-temp planar jet (20) with features: concentrated energy, wide coverage and slow decay of shaft velocity, disposed below the rectangle outlet (12) of the high-temp bypass duct (9) and on the upper surface of the aircraft for spewing the low-temp planar jet (20) to flow over the upper one comprising the ailerons (1, 2), thereby generating the life and the power controlling vertical and horizontal balances.

2. The aircraft according to claim 1 wherein the rectangle outlet (19) of low-temp bypass duct (15), during vertical take-off/landing, forms low-temp planar jet (20) on supper surface of it for generating lift efficiently.

3. The aircraft according to claim 1 wherein high-temp bypass duct (9), during vertical take-off/landing, causes the high-temp air (11) above the low-temp planar jet (20) for keeping no air to flow over lower surface of it.

4. The aircraft according to claim 1 wherein the ailerons (1, 2), during vertical take-off/landing, one pair (1) rotate in opposite way for controlling the horizontal balance and another pair (2) rotate in one way for controlling the vertical balance.

**Amended claims in accordance with Rule 137(2) EPC.**

1. An aircraft having an engine (3) or its combination with a low-temp air accelerator, which supplies not only the low-temp air (18) to a low-temp bypass duct (15) but also the high-temp air (11) to a high-temp bypass duct (9), wherein the outlet (19) of the low-temp bypass duct (15) is positioned and directed to direct the low-temp air (18), which flows in use, over the upper surface of the wing, thereby generating a vertical lift, and the outlet (12) of the high-temp bypass duct (9) is positioned and directed to direct the high-temp air (11), which flows in use, above the low-temp air (18), thereby generating another vertical lift.

2. The aircraft according to claim 1 wherein the shape of the outlet (19) of the low-temp bypass duct (15) is thin slot.

3. The aircraft according to claim 1-2 wherein the shape of the outlet (12) of the high-temp bypass duct (9) is thin slot.

4. The aircraft according to claim 1-3 wherein the width of the outlet (12) of the high-temp bypass duct (9) is no more than one of the outlet (19) of the low-temp bypass duct (15).

5. The aircraft according to claim 1-4 wherein the outlet (12) of the high-temp bypass duct (9) directs the high-temp air (11), which flows in use, above the low-temp air (18), thereby enabling the ailerons (1, 2) to control horizontal and vertical balances of the aircraft more efficiently.

6. The aircraft according to claim 1-5 wherein the outlet (12) of the high-temp bypass duct (9), set above that one (19) of the low-temp bypass duct (15), enables the high-temp air (11), which flows in use, not to burn up the upper surface of the wing.

13

3                    20

**FIG1**

1

2

3

13

20

2

1

**FIG2**

13

J

20    K                    2

**FIG3**

FIG4

A - A

FIG5

B - B

FIG6

FIG7

K

FIG8

C - C

FIG9

**FIG10**

**FIG11**

**FIG12**

M

FIG13

D - D

FIG14

E - E

FIG15

15

**FIG16**

N

19              12

F                    F

3           7    5

**FIG17**

14  15  18  16  8      17     11

3           7   5   10      9

**F - F**

**FIG18**

Europäisches
Patentamt

European
Patent Office

Office européen
des brevets

**EUROPEAN SEARCH REPORT**

Application Number

EP 14 07 5023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 469 612 A (ROLLS ROYCE PLC [GB]) 27 October 2010 (2010-10-27) * abstract; figures * * page 2, lines 11-18 * | 1 | INV. B64C29/00 B64C21/04 |
| A | GB 792 993 A (FREDERICK JOSEPH GROSE) 9 April 1958 (1958-04-09) * figures * * page 1, lines 8-10 * * page 1, line 87 - page 2, line 17 * | 1 | |
| A | US 2012/068020 A1 (MILDE JR KARL F [US]) 22 March 2012 (2012-03-22) * abstract; figures * | 1 | |
| A | FR 2 398 890 A1 (GEN ELECTRIC [US]) 23 February 1979 (1979-02-23) * figures * | 1 | |

| | TECHNICAL FIELDS SEARCHED (IPC) |
|---|---|
| | B64C |

The present search report has been drawn up for all claims

| Place of search | Date of completion of the search | Examiner |
|---|---|---|
| Munich | 16 January 2015 | Nicol, Yann |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 14 07 5023

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2015

| Patent document cited in search report | | Publication date | Patent family member(s) | | Publication date |
|---|---|---|---|---|---|
| GB 2469612 | A | 27-10-2010 | GB 2469612 A | | 27-10-2010 |
| | | | US 7823826 B1 | | 02-11-2010 |
| GB 792993 | A | 09-04-1958 | NONE | | |
| US 2012068020 | A1 | 22-03-2012 | NONE | | |
| FR 2398890 | A1 | 23-02-1979 | AU 3710178 A | | 20-12-1979 |
| | | | DE 2832082 A1 | | 15-02-1979 |
| | | | FR 2398890 A1 | | 23-02-1979 |
| | | | IT 1097969 B | | 31-08-1985 |
| | | | JP S5439718 A | | 27-03-1979 |
| | | | US 4222234 A | | 16-09-1980 |

EPO FORM P0459